# EUROPÄISCHE PATENTANMELDUNG

(11) **EP 2 408 224 A1**
(43) Veröffentlichungstag der Anmeldung: **18.01.2012**
(21) Anmeldenummer: 10007409.5
(22) Anmeldetag: 16.07.2010
(51) Int. Cl.: H04W 16/14, G05B 19/418, H04W 74/08

(54) **Verfahren zum Betrieb eines Automatisierungsnetzwerks**

(71) Anmelder: SIEMENS AKTIENGESELLSCHAFT, 80333 München (DE)
(72) Erfinder: Grebner, Jens, 90489 Nürnberg (DE); Kunz, Martin, 90459 Nürnberg (DE); Talanis, Thomas, 91336 Heroldsbach (DE); Volkmann, Frank, 90475 Nürnberg (DE)

(57) **Zusammenfassung**

Die Erfindung betrifft ein Verfahren zum Betrieb eines Automatisierungsnetzwerks (400) mit zumindest einem ersten drahtlosen Kommunikationsnetzwerk (402) und einem zweiten drahtlosen Kommunikationsnetzwerk (404),
wobei sich das erste und/oder das zweite drahtlose Kommunikationsnetzwerk in einem ersten oder einem zweiten Zustand befinden kann,
wobei das erste und/oder das zweite drahtlose Kommunikationsnetzwerk im ersten Zustand vor einer Datenübertragung (204) den jeweiligen Frequenzbereich auf Störungen untersucht (202.a-d) und die Datenübertragung nur dann stattfindet, wenn keine Störung in dem jeweiligen Frequenzbereich detektiert wurde,
wobei das erste und/oder das zweite drahtlose Kommunikationsnetzwerk im zweiten Zustand Daten ohne eine vorherige Untersuchung des jeweiligen Frequenzbereichs überträgt (200.a-f; 300.a-b).

## Beschreibung

Die Erfindung betrifft industrielle Automatisierungsnetzwerke, insbesondere ein Verfahren zum Betrieb eines Automatisierungsnetzwerks mit zumindest einem ersten und einem zweiten drahtlosen Kommunikationsnetzwerk, ein drahtloses Kommunikationsnetzwerk, ein Automatisierungsnetzwerk und computerlesbare Speichermedien.

Zum Aufbau eines Automatisierungsnetzwerks können mehrere Kommunikationsnetzwerke verwendet werden. Diese Kommunikationsnetzwerke können drahtlos sein. In diesem Fall muss beachtet werden, dass sich die drahtlosen Kommunikationsnetzwerke nicht gegenseitig in der Kommunikation stören.

Der Erfindung liegt die Aufgabe zugrunde, ein verbessertes Verfahren zum Betrieb eines Automatisierungsnetzwerks zu schaffen. Außerdem liegt der Erfindung die Aufgabe zugrunde, ein verbessertes drahtloses Kommunikationsnetzwerk, ein verbessertes Automatisierungsnetzwerk und verbesserte Speichermedien für ein solches Kommunikationsnetzwerk und ein solches Automatisierungsnetzwerk zu schaffen.

Die der Erfindung zugrunde liegenden Aufgaben werden jeweils mit den Merkmalen der unabhängigen Ansprüche gelöst. Ausführungsformen der Erfindung sind in den abhängigen Patentansprüchen gegeben.

Ein Automatisierungsnetzwerk kann z.B. drahtgebundene Kommunikationskomponenten und/oder drahtlose Kommunikationskomponenten umfassen. Ein Automatisierungsnetzwerk umfasst zumindest eine Automatisierungseinrichtung. Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein-und/oder Ausgabegeräte oder Ähnliches zum Anschluss an einer speicherprogrammierbare Steuerung sein oder solche umfassen.

Zum Aufbau eines Automatisierungsnetzwerks können mehrere Kommunikationsnetzwerke verwendet werden. Diese Kommunikationsnetzwerke können drahtlos sein. In diesem Fall muss beachtet werden, dass sich die drahtlosen Kommunikationsnetzwerke nicht gegenseitig in der Kommunikation stören.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Produktionsprozess abläuft, in dem z.B. ein Produkt hergestellt wird.

Die Datenübertragung in einem Automatisierungsnetzwerk geschieht mit Hilfe eines Automatisierungsprotokolls. Als Automatisierungsprotokoll im Sinne der vorliegenden Erfindung wird jede Art von Protokoll verstanden, das zur Kommunikation mit Komponenten des Automatisierungsnetzwerks gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Erfindungsgemäß wird ein Verfahren zum Betrieb eines Automatisierungsnetzwerks mit zumindest einem ersten und einem zweiten drahtlosen Kommunikationsnetzwerk geschaffen. Die räumliche Funkabdeckung des ersten und die räumliche Funkabdeckung des zweiten drahtlosen Kommunikationsnetzwerks überlappen sich zumindest teilweise. Das erste drahtlose Kommunikationsnetzwerk überträgt zumindest in einem Teilbereich eines ersten Frequenzbereichs Daten und das zweite drahtlose Kommunikationsnetzwerk zumindest in einem Teilbereich eines zweiten Frequenzbereichs. Der erste und der zweite Frequenzbereich überlappen sich zumindest teilweise. Das erste und/oder das zweite drahtlose Kommunikationsnetzwerk können sich in einem ersten oder in einem zweiten Zustand befinden. Das erste und/oder das zweite drahtlose Kommunikationsnetzwerk untersucht im ersten Zustand vor einer Datenübertragung den jeweiligen Frequenzbereich auf Störungen. Die Datenübertragung findet nur dann statt, wenn keine Störung in dem jeweiligen Frequenzbereich detektiert wurde. Das erste und/oder das zweite drahtlose Kommunikationsnetzwerk übertragen Daten ohne eine vorherige Untersuchung des jeweiligen Frequenzbereichs im zweiten Zustand.

Wenn sich also ein Kommunikationsnetzwerk im zweiten Zustand befindet, sendet es Daten ohne Rücksicht auf etwaige Störungen in dem jeweiligen Frequenzbereich. Im ersten Zustand sendet das jeweilige Kommunikationsnetzwerk erst dann Daten, wenn keine Störungen in dem jeweiligen Frequenzbereich detektiert wurden. Ein Kommunikationsnetzwerk im ersten Zustand vermeidet also Konflikte in der drahtlosen Kommunikation zwischen zwei drahtlosen Kommunikationsnetzwerken, indem es keine Daten überträgt, wenn die Datenübertragung durch zumindest ein anderes Kommunikationsnetzwerk gestört werden könnte oder eine Datenübertragung in zumindest einem anderen Kommunikationsnetzwerk stören könnte. Als Störung wird hier insbesondere auch verstanden, dass die Datenübertragung in einem Kommunikationsnetzwerk durch die Datenübertragung in einem anderen Kommunikationsnetzwerk durch zum Beispiel Interferenzen gestört wird. Dies kann der Fall sein, da sich der erste und der zweite Frequenzbereich zumindest teilweise überlappen.

Das Netzwerk, das sich im zweiten Zustand befindet, überträgt Daten ohne eine vorige Untersuchung des jeweiligen Frequenzbereichs. Man könnte also ein Kommunikationsnetzwerk im zweiten Zustand auch als höher priorisiert bezeichnen. Ein höher priorisiertes Kommunikationsnetzwerk überträgt Daten ohne Rücksicht auf etwaige Störungen.

Nach Ausführungsformen der Erfindung wird der Zustand des ersten und/oder des zweiten drahtlosen Kommunikationsnetzwerks während des Aufbaus des jeweiligen Netzwerks festgelegt. Die Festlegung des Zustands erfolgt also bei der Planung des Automatisierungsnetzwerks.

Nach Ausführungsformen der Erfindung wird der Zustand des ersten und/oder des zweiten Kommunikationsnetzwerks während des Betriebs des ersten und/oder des zweiten Kommunikationsnetzwerks geändert. Diese Änderung kann manuell oder automatisch durch eine Komponente des Automatisierungsnetzwerks erfolgen.

Nach Ausführungsformen der Erfindung ist das zweite Kommunikationsnetzwerk ein deterministisches Kommunikationsnetzwerk und befindet sich im zweiten Zustand. Das erste Kommunikationsnetzwerk befindet sich im ersten Zustand. Ein deterministisches Kommunikationsnetzwerk ist ein Netzwerk, bei dem es essentiell ist, dass die Daten beim Empfänger der Daten zu einem bestimmten Zeitpunkt ankommen. Bei Automatisierungsnetzwerken ist dies zum Beispiel notwendig, wenn ein Aktuator oder Sensor zu einem bestimmten Zeitpunkt eine bestimmte Aktion durchführen muss, damit das Automatisierungsnetzwerk im Sinne des Produktionsprozesses funktioniert. Sollten die Daten zu einem anderen Zeitpunkt beim Aktuator oder Sensor ankommen, kann dies zu erheblichen Problemen im maschinellen Produktionsprozess führen. Ein deterministisches Kommunikationsnetzwerk kann ebenso als isochrones zyklisches Kommunikationsnetzwerk bezeichnet werden. Das deterministische Kommunikationsnetzwerk wird deshalb höher priorisiert, da hier die zeitgenaue Datenübertragung von größerer Wichtigkeit ist. Sollte sich das deterministische Kommunikationsnetzwerk im ersten Zustand befinden, könnte es sein, dass eine Datenübertragung nicht stattfindet, weil eine Störung in dem zweiten Frequenzbereich detektiert wurde. Wie oben bereits erwähnt, könnte dies zu erheblichen Problemen im Automatisierungsnetzwerk und dem dazugehörigen maschinellen Produktionsprozess führen.

Üblicherweise haben deterministische Kommunikationsnetzwerke einen geringen Duty Cycle. Dies bedeutet, dass Daten mit einer geringen Häufigkeit übertragen werden. Der Duty Cycle eines Kommunikationsnetzwerks drückt in Prozent den Anteil der Zeit, die für Datenübertragungen genutzt wurde, an der Gesamtbetriebszeit des Kommunikationsnetzwerks aus. Ein Duty Cycle von beispielsweise 1 % bedeutet, dass das deterministische Kommunikationsnetzwerk Einhundertstel der insgesamt zur Verfügung stehenden Zeit zur Datenübertragung nutzt. Beispielsweise bedeutet dies, dass alle 100 Sekunden für 1 Sekunde Daten übertragen werden. Vorzugsweise hat das zweite Kommunikationsnetzwerk einen Duty Cycle von weniger als 1 %.

Nach Ausführungsformen der Erfindung umfasst der Teilbereich des ersten Frequenzbereichs und/oder der Teilbereich des zweiten Frequenzbereichs weniger als 90 % des jeweiligen Frequenzbereichs. Dies bedeutet, dass sich der erste und der zweite Frequenzbereich zwar zumindest teilweise überlappen, aber dies muss nicht unbedingt für die für die Datenübertragungen genutzten Teilbereiche gelten. Falls sich die Teilbereiche nicht überlappen, könnten Datenübertragungen in beiden Netzwerken gleichzeitig stattfinden, ohne dass sich die Datenübertragungen gegenseitig stören würden. In diesem Fall wäre es unnötig, dass auf die Datenübertragung in einem der beiden Kommunikationsnetzwerke verzichtet wird. Durch die Höherpriorisierung des deterministischen Kommunikationsnetzwerks wird verhindert, dass eine Datenübertragung im deterministischen Kommunikationsnetzwerk unnötigerweise unterlassen wird. Gegebenenfalls könnte eine Datenübertragung im ersten Kommunikationsnetzwerk, das sich im ersten Zustand befindet, unnötigerweise unterbleiben. Dies hat allerdings weniger weitreichende Folgen, da das erste Kommunikationsnetzwerk kein deterministisches Kommunikationsnetzwerk ist.

Es ist also vorteilhaft bei Ausführungsformen der Erfindung, dass das zur Verfügung stehende Frequenzspektrum besser ausgenutzt werden kann als bei Kommunikationsnetzwerken aus dem Stand der Technik. Die einzelnen Kanäle der Kommunikationsnetzwerke können sich teilweise überlappen, ohne dass eine Datenübertragung in einem deterministischen Kommunikationsnetzwerk unnötigerweise unterbunden wird. Da das deterministische Kommunikationsnetzwerk üblicherweise eine Duty Cycle von weniger als 1 % hat, treten selten Störungen bei Datenübertragungen im ersten Netzwerk auf. Falls eine solche Störung detektiert werden sollte, werden im ersten Netzwerk keine Daten übertragen, sodass auch das deterministische Kommunikationsnetzwerk nicht gestört wird.

Nach Ausführungsformen der Erfindung wird zur Untersuchung des ersten und/oder des zweiten Frequenzbereichs ein Empfänger des jeweiligen Kommunikationsnetzwerks verwendet. Der Empfänger des jeweiligen Netzwerks ist dazu ausgebildet, Signale des jeweiligen Frequenzbereichs zu empfangen. Er empfängt also auch eventuelle Störungen in dem jeweiligen Frequenzbereich. Diese empfangenen Störungen können also durch den Empfänger detektiert werden.

Nach Ausführungsformen der Erfindung detektiert das erste drahtlose Kommunikationsnetzwerk Datenübertragungen des zweiten drahtlosen Kommunikationsnetzwerks im ersten Frequenzbereich als Störung und das zweite drahtlose Kommunikationsnetzwerk Datenübertragungen des ersten drahtlosen Kommunikationsnetzwerks im zweiten Frequenzbereich als Störung.

In einem weiteren Aspekt betrifft die Erfindung ein drahtloses Kommunikationsnetzwerk. Das drahtlose Kommunikationsnetzwerk weist Mittel zur drahtlosen Übertragung in einem Teilbereich eines Frequenzbereichs auf. Das drahtlose Kommunikationsnetzwerk weist ferner Mittel zur Festlegung des drahtlosen Kommunikationsnetzwerks in einem ersten oder einem zweiten Zustand auf. Das drahtlose Kommunikationsnetzwerk ist dazu ausgebildet, im ersten Zustand vor einer Datenübertragung den Frequenzbereich auf Störung zu untersuchen und die drahtlose Kommunikation nur dann durchzuführen, wenn keine Störung in dem Frequenzbereich detektiert wurde. Das drahtlose Kommunikationsnetzwerk ist ferner dazu ausgebildet, im zweiten Zustand die drahtlose Kommunikation ohne eine vorherige Untersuchung des Frequenzbereichs durchzuführen.

In einem weiteren Aspekt betrifft die Erfindung ein Automatisierungsnetzwerk aus zumindest einem ersten und einem zweiten drahtlosen Kommunikationsnetzwerk. Das erste und das zweite drahtlose Kommunikationsnetzwerk überlappen sich zumindest teilweise räumlich. Das erste drahtlose Kommunikationsnetzwerk ist dazu ausgebildet, zumindest in einem Teilbereich eines ersten Frequenzbereichs Daten zu übertragen und das zweite drahtlose Kommunikationsnetzwerk ist dazu ausgebildet, zumindest in einem Teilbereich eines zweiten Frequenzbereichs Daten zu übertragen. Das erste und/oder das zweite drahtlose Kommunikationsnetzwerk umfasst Mittel zur Festlegung des jeweiligen drahtlosen Kommunikationsnetzwerks in einem ersten oder einem zweiten Zustand. Das erste und/oder das zweite drahtlose Kommunikationsnetzwerk ist dazu ausgebildet, im ersten Zustand vor einer Datenübertragung im jeweiligen Frequenzbereich auf Störungen zu untersuchen und die Datenübertragung nur dann durchzuführen, wenn keine Störung in dem jeweiligen Frequenzbereich detektiert wurde. Das erste und/oder das zweite drahtlose Kommunikationsnetzwerk ist ferner dazu ausgebildet, im zweiten Zustand Daten ohne eine vorherige Untersuchung des jeweiligen Frequenzbereichs zu übertragen.

In noch einem weiteren Aspekt betrifft die Erfindung ein computerlesbares Speichermedium mit Instruktionen, die bei Ausführung in einem drahtlosen Kommunikationsnetzwerk das drahtlose Kommunikationsnetzwerk zur Ausführung des folgenden Verfahrens veranlassen:

Das drahtlose Kommunikationsnetzwerk überträgt Daten zumindest in einem Teilbereich eines Frequenzbereichs. Das drahtlose Kommunikationsnetzwerk kann sich in einem ersten oder einem zweiten Zustand befinden. Das drahtlose Kommunikationsnetzwerk untersucht im ersten Zustand vor einer Datenübertragung den Frequenzbereich auf Störungen und die Datenübertragung findet nur dann statt, wenn keine Störung in dem Frequenzbereich detektiert wurde. Das drahtlose Kommunikationsnetzwerk überträgt im zweiten Zustand Daten ohne eine vorherige Untersuchung des Frequenzbereichs.

In noch einem weiteren Aspekt betrifft die Erfindung ein computerlesbares Speichermedium mit Instruktionen, die bei Ausführung in einem Automatisierungsnetzwerk mit zumindest einem ersten und einem zweiten drahtlosen Kommunikationsnetzwerk das Automatisierungsnetzwerk zur Ausführung des folgenden Verfahrens veranlassen. Das erste und das zweite drahtlose Kommunikationsnetzwerk überlappen sich dabei räumlich. Das erste drahtlose Kommunikationsnetzwerk überträgt Daten zumindest in einem Teilbereich eines ersten Frequenzbereichs und das zweite drahtlose Kommunikationsnetzwerk überträgt Daten zumindest in einem Teilbereich eines zweiten Frequenzbereichs. Das erste und/oder das zweite drahtlose Kommunikationsnetzwerk kann sich in einem ersten oder einem zweiten Zustand befinden. Das erste und/oder das zweite drahtlose Kommunikationsnetzwerk untersucht im ersten Zustand vor einer Datenübertragung den jeweiligen Frequenzbereich auf Störungen und überträgt Daten, nur wenn keine Störung im jeweiligen Frequenzbereich detektiert wurde. Das erste und/oder das zweite drahtlose Kommunikationsnetzwerk überträgt im zweiten Zustand Daten ohne ein vorheriges Untersuchen des vorigen Frequenzbereichs.

Die Speichermedien können optische, magnetische, digitale Speichermedien sein. Außerdem kann es sich um rotierende Speichermedien handeln. Es können also Speicherkarten, USB-Sticks und/oder Festplatten sein.

Im Weiteren werden Ausführungsformen der Erfindung mit Bezugnahme auf die Zeichnungen näher erläutert. Es zeigen:
- Figur 1: eine grafische Darstellung von Frequenzbereichen eines ersten und eines zweiten drahtlosen Kommuni- kationsnetzwerks mit zumindest teilweise sich überlappenden Frequenzbereichen;
- Figur 2: eine schematische Darstellung von Signalübertragungen im ersten und im zweiten Kommunikationsnetzwerk;
- Figur 3: eine schematische Darstellung von Signalübertragungen zweiter Kommunikationsnetzwerke; und
- Figur 4: ein Blockdiagramm eines Automatisierungsnetzwerks mit zwei drahtlosen Kommunikationsnetzwerken.

Elemente der nachfolgenden Figuren, die einander entsprechen, sind mit denselben Bezugszeichen gekennzeichnet.

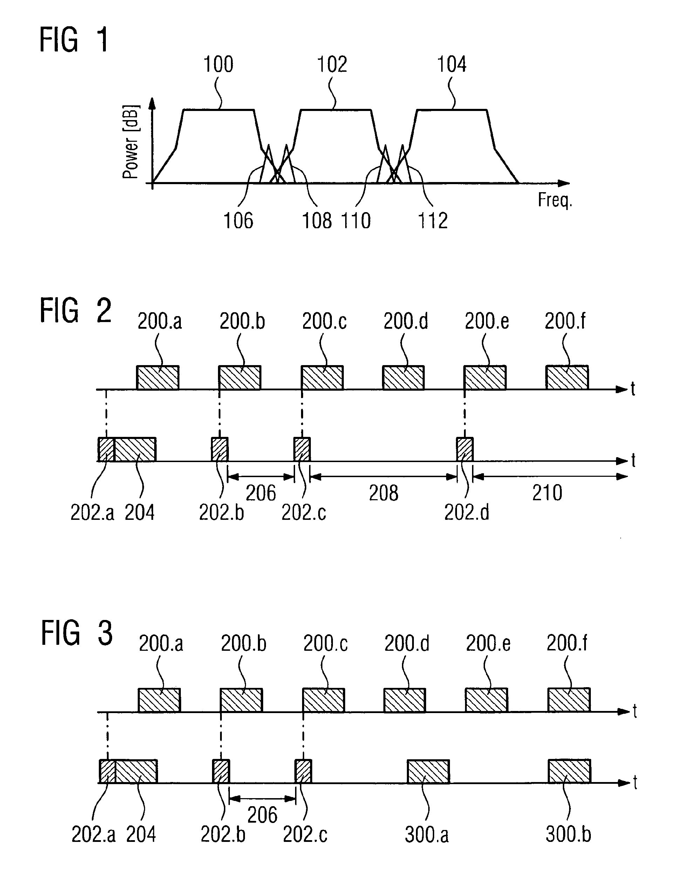

Figur 1 ist eine schematische grafische Ansicht eines ersten Kanals 100 eines ersten drahtlosen Kommunikationsnetzwerksund eines zweiten Kanals 106 eines zweiten drahtlosen Kommunikationsnetzwerks. Das erste drahtlose Kommunikationsnetzwerk kann beispielsweise ein WLAN sein und das zweite drahtlose Kommunikationsnetzwerk kann beispielsweise ein drahtloses Kommunikationsnetzwerk nach dem IEEE 802.15.4 Standard, zum Beispiel ZigBee, sein. Die X-Achse des Diagramms stellt das zur Verfügung stehende Frequenzspektrum dar und die Y-Achse die jeweils für den Kanal maximal erlaubte Signalintensität in Dezibel. Außerdem sind in Fig. 1 weitere Kanäle 102, 104, 108, 110, 112 dargestellt, die zu anderen drahtlosen Netzwerken gehören können.

Der erste Kanal 100 des ersten drahtlosen Kommunikationsnetzwerks überlappt zumindest teilweise mit dem zweiten Kanal 106 des zweiten drahtlosen Kommunikationsnetzwerks. Ein Kanal kann hier auch als Frequenzbereich bezeichnet werden, da ein bestimmter Kanal einem bestimmten Frequenzbereich entspricht. Der erste Kanal 100 des ersten drahtlosen Kommunikationsnetzwerks umfasst den gesamten Frequenzbereich des zweiten Kanals 106 des zweiten drahtlosen Kommunikationsnetzwerks. Der zweite Kanal 106 des zweiten drahtlosen Kommunikationsnetzwerks umfasst weniger als 10 % des Frequenzbereichs des ersten Kanals 100 des ersten drahtlosen Kommunikationsnetzwerks.

Bei Datenübertragungen in einem der beiden Kanäle 100 oder 106 können Datenübertragungen in dem jeweils anderen Kanal 100 oder 106 gestört werden, da es aufgrund der überlappenden Frequenzbereiche zu Interferenzen kommen kann.

Figur 2 ist eine schematische Darstellung auf der Zeitachse t von Datenübertragungen in den beiden Kanälen 100 und 106. Datenübertragungen im Kanal 106 sind oben dargestellt und Datenübertragungen im Kanal 100 sind unten dargestellt.

Das zweite Kommunikationsnetzwerk mit Kanal 106 befindet sich hier im ersten Zustand, ist also höher priorisiert als das erste Netzwerk mit Kanal 100. Das bedeutet, dass Datenübertragungen über den Kanal 106 immer stattfinden, ohne Rücksicht auf Datenübertragungen im Kanal 100. Die Datenübertragungen im zweiten Kanal 106 des zweiten Kommunikationsnetzwerks sind in Figur 2 mit dem Bezugszeichen 200.a bis 200.f gekennzeichnet.

Das erste Kommunikationsnetzwerk mit dem ersten Kanal 100 befindet sich im zweiten Zustand, ist also niedriger priorisiert als das zweite Kommunikationsnetzwerk. Vor Datenübertragungen über den Kanal 100 im ersten Kommunikationsnetzwerk wird der Kanal 100 immer untersucht, ob Störungen vorhanden sind. Als Störungen werden hier ebenfalls Datenübertragungen des zweiten Kommunikationsnetzwerks über den ersten Kanal 100 detektiert. Zur Untersuchung des Kanals 100 auf Störungen umfasst ein Sender im ersten Kommunikationsnetzwerk auch eine Empfangseinheit (nicht dargestellt), wobei die Empfangseinheit jeweils vor einer Datenübertragung zur Detektion von eventuellen Störungen verwendet wird. Die Untersuchung des Kanals 100 auf eventuelle Störungen ist in Figur 2 mit Bezugszeichen 202.a bis 202.d gekennzeichnet.

Bei der ersten Untersuchung 202.a des ersten Kanals 100 findet keine Datenübertragung im Kanal 106 des zweiten drahtlosen Kommunikationsnetzwerks statt. Daher findet im Anschluss an die Untersuchung 202.a eine Datenübertragung 204 über den ersten Kanal 100 des ersten drahtlosen Kommunikationsnetzwerks statt. Während dieser Datenübertragung 204 wird ebenfalls eine Datenübertragung 200.a im zweiten Kanal 106 des zweiten drahtlosen Kommunikationsnetzwerks durchgeführt. Da das zweite drahtlose Kommunikationsnetzwerk sich im ersten Zustand befindet, wird vor der Datenübertragung 200.a nicht geprüft, ob eventuelle Störungen des Kanals 106 vorliegen.

Während einer zweiten Untersuchung 202.b des ersten Kanals 100 des ersten drahtlosen Kommunikationsnetzwerks findet eine Datenübertragung 200.b im zweiten Kanal 106 des zweiten drahtlosen Kommunikationsnetzwerks statt. Daher wird auf eine Datenübertragung im ersten Kanal 100 des ersten drahtlosen Kommunikationsnetzwerks verzichtet. Die Datenübertragung 200.b wurde während der Untersuchung 202.b als Störung des Kanals 100 detektiert. Da sich das erste drahtlose Kommunikationsnetzwerk im ersten Zustand befindet, wird in einem solchen Fall auf eine Datenübertragung verzichtet. Anschließend wird eine Zeitspanne 206 gewartet, bevor die nächste Untersuchung 202.c des ersten Kanals 100 des ersten drahtlosen Kommunikationsnetzwerks durchgeführt wird. Während der Untersuchung 202.c findet wiederum eine Datenübertragung 202.c im Kanal 106 des zweiten drahtlosen Kommunikationsnetzwerks statt. Daraufhin wird im ersten Kanal 100 des ersten drahtlosen Kommunikationsnetzwerks wiederum auf eine Datenübertragung verzichtet und eine zweite Zeitspanne 208, die länger als die erste Zeitspanne 206 ist, gewartet. Bei der vierten Untersuchung 202.d findet wiederum eine Datenübertragung 200.e im zweiten Kanal 106 des zweiten drahtlosen Kommunikationsnetzwerks statt, woraufhin im ersten drahtlosen Kommunikationsnetzwerk wiederum eine Zeitspanne 210 gewartet wird.

Figur 3 ist eine schematische Darstellung von Datenübertragungen im ersten und zweiten drahtlosen Kommunikationsnetzwerk. Datenübertragungen im zweiten Kanal 106 des zweiten drahtlosen Kommunikationsnetzwerks sind wie in Figur 2 oben und Datenübertragungen im ersten Kanal 100 des ersten drahtlosen Kommunikationsnetzwerks wie in Figur 2 unten dargestellt.

Die ersten drei Untersuchungen 202.a, 202.b und 202.c entsprechen den Untersuchungen 202.a, 202.b und 202.c aus Figur 2. Zwischen den Untersuchungen 202.b und 202.c wird wiederum eine Zeitspanne 206 gewartet. Nach Untersuchung 202.a fand eine Datenübertragung 204 im zweiten Kanal 106 des zweiten drahtlosen Kommunikationsnetzwerks statt. Im zweiten Kanal 106 des zweiten drahtlosen Kommunikationsnetzwerks finden während des gesamten, in Figur 3 dargestellten Zeitraums die Datenübertragungen 200.a bis 200.f analog zu Figur 2 statt.

Nach der Untersuchung 202.c des ersten Kanals 100 des ersten drahtlosen Kommunikationsnetzwerks und nach der Datenübertragung 200.c im zweiten Kanal 106 des zweiten drahtlosen Kommunikationsnetzwerks wird der Zustand des ersten drahtlosen Kommunikationsnetzwerks geändert. Das erste drahtlose Kommunikationsnetzwerk befindet sich nun im höher priorisierten zweiten Zustand. Das heißt, dass nach der Untersuchung 202.c keine weiteren Untersuchungen des ersten Kanals 100 im ersten drahtlosen Kommunikationsnetzwerk mehr stattfinden. Es finden Datenübertragungen über den ersten Kanal 100 unabhängig von Datenübertragungen im zweiten Kanal 106 statt. Somit werden unnötige Unterlassungen von Datenübertragungen verhindert. Beispielsweise findet eine Datenübertragung 300.a zumindest teilweise zeitgleich mit einer Datenübertragung 200.d und eine Datenübertragung 300.b zeitgleich mit der Datenübertragung 200.f statt. Es können sich also auch beide Kommunikationsnetzwerke im höher priorisierten Zustand befinden.

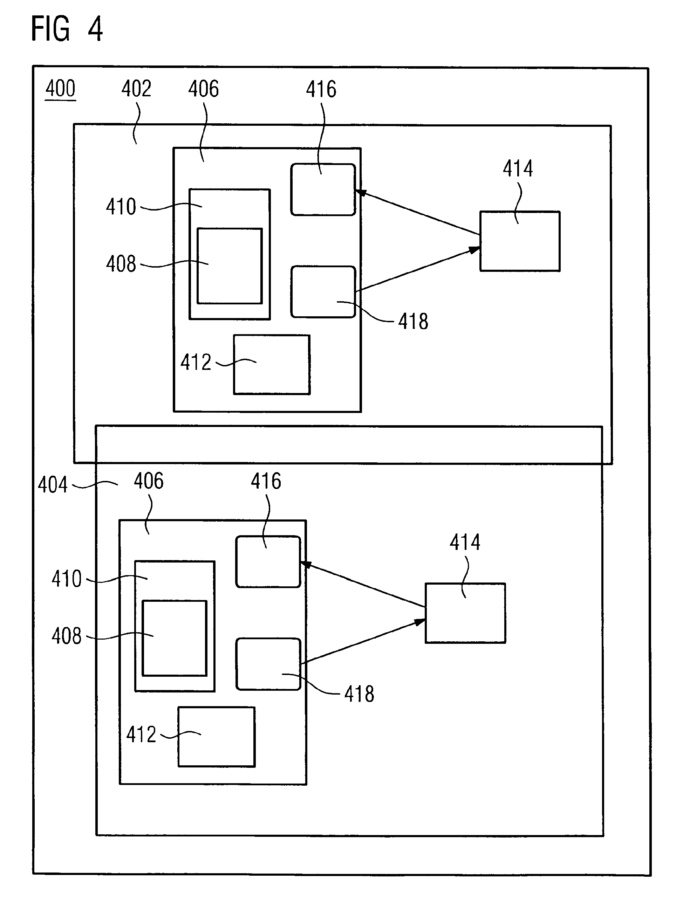

Figur 4 ist ein Blockdiagramm eines Automatisierungsnetzwerks 400 mit einem drahtlosen Kommunikationsnetzwerk 402 und einem zweiten drahtlosen Kommunikationsnetzwerk 404. Die beiden drahtlosen Kommunikationsnetzwerke 402 und 402 können nach gleichen oder unterschiedlichen drahtlosen Kommunikationsstandards wie zum Beispiel WLAN oder ZigBee betrieben werden. Die beiden drahtlosen Kommunikationsnetzwerke 402 und 404 überlappen in ihrer räumlichen Funkabbdeckung teilweise miteinander.

Jedes der drahtlosen Kommunikationsnetzwerke 402 und 404 verfügt über ein zentrales Netzwerkelement 406. Das zentrale Netzwerkelement 406 verfügt über einen Datenspeicher 410 mit einem Programm 408 und einen Prozessor 412. Außerdem verfügt jedes zentrale Netzwerkelement 406 über Datenempfangsmittel 416 und Datensendemittel 418. Die Datensendemittel 418 sind dazu ausgebildet, Daten an eine Netzwerkkomponente 414 zu übertragen. Dies können beispielsweise Automatisierungsdaten sein, die die Netzwerkkomponente 414 zur Übertragung von Daten und/oder Ausführen einer Aktion veranlassen. Die Datenempfangsmittel 416 des zentralen Netzwerkelements 406 sind dazu ausgebildet, Daten von der Netzwerkkomponente 414 zu empfangen. Dies können beispielsweise von der Netzwerkkomponente 414 gemessene Daten sein. Die Datenempfangsmittel 416 dienen ebenfalls dazu, Störungen eines Netzwerkkanals des jeweiligen drahtlosen Kommunikationsnetzwerks 402 oder 404 zu detektieren.

Im Betrieb wird der Zustand des jeweiligen drahtlosen Kommunikationsnetzwerks 402 oder 404 durch den Prozessor 412 festgelegt. Dies kann beispielsweise durch eine manuelle Festlegung des Benutzers ausgelöst werden oder automatisch durch den Prozessor durch Ausführung des Programms 408 ausgeführt werden. Der Prozessor steuert durch Ausführung des Programms 408 die Datenübertragungen des zentralen Netzwerkelements 406. Je nach Zustand des drahtlosen Kommunikationsnetzwerks 402 oder 404 wird vor einer Datenübertragung der betreffende Kanal auf Störungen hin untersucht, indem die Datenempfangsmittel 416 Signale der betreffenden Frequenzen empfangen. Der Prozessor 412 analysiert die empfangenen Signale im Hinblick auf Störungen. Störungen können zum Beispiel Datenübertragungen im jeweils anderen drahtlosen Kommunikationsnetzwerk sein.

### Bezugszeichenliste

- 100: erster Kanal des ersten drahtlosen Kommunikationsnetzwerks
- 102: Kanal
- 104: Kanal
- 106: zweiter Kanal des zweiten drahtlosen Kommunikationsnetzwerks
- 108: Kanal
- 110: Kanal
- 112: Kanal
- 200.a-f: Datenübertragung
- 202.a-d: Untersuchung
- 204: Datenübertragung
- 206: Zeitspanne
- 208: Zeitspanne
- 210: Zeitspanne
- 300.a-b: Datenübertragung
- 400: Automatisierungsnetzwerk
- 402: drahtloses Kommunikationsnetzwerk
- 404: drahtloses Kommunikationsnetzwerk
- 406: zentrales Netzwerkelement
- 408: Programm
- 410: Datenspeicher
- 412: Prozessor
- 414: Netzwerkkomponente
- 416: Datenempfangsmittel
- 418: Datensendemittel

## Patentansprüche

1. Verfahren zum Betrieb eines Automatisierungsnetzwerks (400) mit zumindest einem ersten drahtlosen Kommunikationsnetzwerk (402) und einem zweiten drahtlosen Kommunikationsnetzwerk (404),
wobei sich die räumliche Funkabdeckung des ersten und die räumliche Funkabdeckung des zweiten drahtlosen Kommunikationsnetzwerks zumindest teilweise überlappen,
wobei das erste drahtlose Kommunikationsnetzwerk zumindest in einem Teilbereich eines ersten Frequenzbereichs (100) Daten überträgt und das zweite drahtlose Kommunikationsnetzwerk zumindest in einem Teilbereich eines zweiten Frequenzbereichs (106) Daten überträgt, wobei sich der erste und der zweite Frequenzbereich zumindest teilweise überlappen,
wobei sich das erste und/oder das zweite drahtlose Kommunikationsnetzwerk in einem ersten oder einem zweiten Zustand befinden kann,
wobei das erste und/oder das zweite drahtlose Kommunikationsnetzwerk im ersten Zustand vor einer Datenübertragung (204) den jeweiligen Frequenzbereich auf Störungen untersucht (202.a-d) und die Datenübertragung nur dann stattfindet, wenn keine Störung in dem jeweiligen Frequenzbereich detektiert wurde,
wobei das erste und/oder das zweite drahtlose Kommunikationsnetzwerk im zweiten Zustand Daten ohne eine vorherige Untersuchung des jeweiligen Frequenzbereichs überträgt (200.a-f; 300.a-b).

2. Verfahren nach Anspruch 1, wobei der Zustand des ersten und/oder des zweiten drahtlosen Kommunikationsnetzwerks während des Aufbaus des jeweiligen Netzwerks festgelegt wird.

3. Verfahren nach einem der vorhergehenden Ansprüche, wobei während des Betriebs des ersten und/oder des zweiten Kommunikationsnetzwerks der Zustand des jeweiligen Netzwerks geändert werden kann.

4. Verfahren nach einem der vorhergehenden Ansprüche, wobei das zweite Kommunikationsnetzwerk ein deterministisches Kommunikationsnetzwerk ist und sich im zweiten Zustand befindet, und wobei sich das erste Kommunikationsnetzwerk im ersten Zustand befindet.

5. Verfahren nach einem der vorhergehenden Ansprüche, wobei der Teilbereich des ersten Frequenzbereichs und/oder der Teilbereich des zweiten Frequenzbereichs weniger als 90% des jeweiligen Frequenzbereichs umfasst.

6. Verfahren nach einem der vorhergehenden Ansprüche, wobei zur Untersuchung des ersten und/oder zweiten Frequenzbereichs ein Empfänger (416) des jeweiligen Kommunikationsnetzwerks verwendet wird.

7. Verfahren nach einem der vorhergehenden Ansprüche, wobei das erste drahtlose Kommunikationsnetzwerk Datenübertragungen des zweiten drahtlosen Kommunikationsnetzwerks im ersten Frequenzbereich als Störung detektiert und das zweite drahtlose Kommunikationsnetzwerk Datenübertragungen des ersten drahtlosen Kommunikationsnetzwerks im zweiten Frequenzbereich als Störung detektiert.

8. Drahtloses Kommunikationsnetzwerk,
wobei das drahtlose Kommunikationsnetzwerk Mittel (418) zur drahtlosen Datenübertragung in einem Teilbereich eines Frequenzbereichs aufweist,
wobei das drahtlose Kommunikationsnetzwerk Mittel (412) zur Festlegung des drahtlosen Kommunikationsnetzwerks in einen ersten oder einen zweiten Zustand umfasst,
wobei das drahtlose Kommunikationsnetzwerk dazu ausgebildet ist, im ersten Zustand vor einer Datenübertragung den Frequenzbereich auf Störungen zu untersuchen und die drahtlose Kommunikation nur dann durchzuführen, wenn keine Störung in dem Frequenzbereich detektiert wurde,
wobei das drahtlose Kommunikationsnetzwerk dazu ausgebildet ist, im zweiten Zustand die drahtlose Kommunikation ohne eine vorherige Untersuchung des Frequenzbereichs durchzuführen.

9. Drahtloses Kommunikationsnetzwerk nach Anspruch 8,
wobei das drahtlose Kommunikationsnetzwerk zur Durchführung eines Verfahrens gemäß einem der Ansprüche 1-7 ausgebildet und eingerichtet ist.

10. Automatisierungsnetzwerk (400) aus zumindest einem ersten drahtlosen Kommunikationsnetzwerk (402) und einem zweiten drahtlosen Kommunikationsnetzwerk (404), wobei sich das erste und das zweite drahtlose Kommunikationsnetzwerk zumindest teilweise räumlich überlappen,
wobei das erste drahtlose Kommunikationsnetzwerk dazu ausgebildet ist, zumindest in einem Teilbereich eines ersten Frequenzbereichs Daten zu übertragen, und das zweite drahtlose Kommunikationsnetzwerk dazu ausgebildet ist, zumindest in einem Teilbereich eines zweiten Frequenzbereichs Daten zu übertragen,
wobei sich das erste und/oder das zweite drahtlose Kommunikationsnetzwerk Mittel zur Festlegung des jeweiligen drahtlosen Kommunikationsnetzwerks in einen ersten oder einen zweiten Zustand umfasst,
wobei das erste und/oder das zweite drahtlose Kommunikationsnetzwerk dazu ausgebildet ist, im ersten Zustand vor einer Datenübertragung den jeweiligen Frequenzbereich auf Störungen zu untersuchen und die Datenübertragung nur dann durchzuführen, wenn keine Störung in dem jeweiligen Frequenzbereich detektiert wurde,
wobei das erste und/oder das zweite drahtlose Kommunikationsnetzwerk dazu ausgebildet ist, im zweiten Zustand Daten ohne eine vorherige Untersuchung des jeweiligen Frequenzbereichs zu übertragen.

11. Automatisierungsnetzwerk nach Anspruch 11, wobei das Automatisierungsnetzwerk zur Durchführung eines Verfahrens gemäß einem der Ansprüche 1-7 ausgebildet und eingerichtet ist.

12. Computerlesbares Speichermedium (410) mit Instruktionen, die bei Ausführung in einem drahtlosen Kommunikationsnetzwerk das drahtlose Kommunikationsnetzwerk zur Ausführung des folgenden Verfahrens veranlassen:
- das drahtlose Kommunikationsnetzwerk überträgt Daten zumindest in einem Teilbereich eines Frequenzbereichs,
- das drahtlose Kommunikationsnetzwerk kann sich in einem ersten oder einem zweiten Zustand befinden;
- das drahtlose Kommunikationsnetzwerk untersucht im ersten Zustand vor einer Datenübertragung den Frequenzbereich auf Störungen und die Datenübertragung findet nur dann statt, wenn keine Störung in dem Frequenzbereich detektiert wurde;
- das drahtlose Kommunikationsnetzwerk überträgt im zweiten Zustand Daten ohne eine vorherige Untersuchung des Frequenzbereichs.

13. Computerlesbares Speichermedium nach Anspruch 12, wobei das computerlesbare Speichermedium zur Durchführung eines Verfahrens gemäß einem der Ansprüche 1-7 ausgebildet und eingerichtet ist.

14. Computerlesbares Speichermedium (410) mit Instruktionen, die bei Ausführung in einem Automatisierungsnetzwerk mit zumindest einem ersten und einem zweiten drahtlosen Kommunikationsnetzwerk das Automatisierungsnetzwerk zur Ausführung des folgenden Verfahrens veranlassen, wobei sich das erste und das zweite drahtlose Kommunikationsnetzwerk räumlich überlappen:
- das erste drahtlose Kommunikationsnetzwerk überträgt Daten zumindest in einem Teilbereich eines ersten Frequenzbereichs und das zweite drahtlose Kommunikationsnetzwerk überträgt Daten zumindest in einem Teilbereich eines zweiten Frequenzbereichs;
- das erste und/oder das zweite drahtlose Kommunikationsnetzwerk kann sich in einem ersten oder einem zweiten Zustand befinden;
- das erste und/oder das zweite drahtlose Kommunikationsnetzwerk untersucht im ersten Zustand vor einer Datenübertragung den jeweiligen Frequenzbereich auf Störungen und überträgt Daten, nur wenn keine Störung in dem jeweiligen Frequenzbereich detektiert wurde;
- das erste und/oder das zweite drahtlose Kommunikationsnetzwerk überträgt im zweiten Zustand Daten ohne eine vorherige Untersuchung des jeweiligen Frequenzbereichs.

15. Computerlesbares Speichermedium nach Anspruch 14, wobei das computerlesbare Speichermedium zur Durchführung eines Verfahrens gemäß einem der Ansprüche 1-7 ausgebildet und eingerichtet ist.
